# FASCICULE DE BREVET EUROPEEN

(11) **EP 0 706 493 B1**
(45) Date de publication et mention de la délivrance du brevet: **25.03.1998**
(21) Numéro de dépôt: 95915734.8
(22) Date de dépôt: 02.05.1995
(51) Int. Cl.: B65G 47/51, B65G 47/57, B65G 65/00

(54) **INSTALLATION DE STOCKAGE PENDULAIRE**
HÄNGESPEICHER
SUSPENDED STORAGE APPARATUS

(30) Priorité: 03.05.1994 FR 9405778
(43) Date de publication de la demande: 17.04.1996
(73) Titulaire: SAPAL, Société Anonyme des Plieuses Automatiques, 1400 Ecublens (CH)
(72) Inventeur: HOFMANN, Armin, CH-1030 Bussigny (CH); SCHNEIDER, Hauke, D-79807 Lottstetten (DE)
(74) Mandataire: Nithardt, Roland
(86) Numéro de dépôt international: CH9500098
(87) Numéro de publication internationale: WO9529863

(56) Documents cités:
- EP-A- 0 534 902
- EP-A- 0 538 742
- EP-A- 0 569 788
- DE-A- 3 238 888
- FR-A- 552 677
- US-A- 4 117 921

## Description

La présente invention concerne une installation de stockage pendulaire de produits, notamment de produits alimentaires et plus particulièrement de plaques de chocolat ou similaires, ces produits étant déposés sur des tablettes disposées horizontalement sur des gondoles pendues horizontalement à deux chaînes cheminant parallèlement entre elles sur un circuit fermé comprenant une section d'alimentation allant d'une station de dépôt des produits sur les tablettes, à une station réceptrice de ces produits agencée pour décharger les tablettes, et une section de retour dans laquelle les tablettes sont ramenées vides de la station réceptrice à la station de dépôt, dans laquelle la station réceptrice comporte un équipement composé d'un dispositif à poussoir associé à un premier mécanisme d'entraînement, le dispositif à poussoir comprenant au moins un poussoir à déplacement sensiblement horizontal, et d'un second mécanisme d'entraînement agencé pour imposer audit poussoir un déplacement sensiblement vertical qui se combine audit déplacement sensiblement horizontal, ledit premier mécanisme comportant une première came de commande liée audit poussoir pour effectuer ledit déplacement sensiblement horizontal, et ledit second mécanisme comportant une seconde came de commande liée audit poussoir pour effectuer ledit déplacement sensiblement vertical.

On connaît déjà de nombreuses installations de stockage pendulaires, notamment celle décrite dans la demande de brevet européen publiée sous le numéro 0 538 742 A1. Dans les lignes de production de produits alimentaires, par exemple les plaques de chocolat, les biscuits, les produits enrobés de chocolat et autres produits fragiles et délicats à manipuler, il est souvent nécessaire de pouvoir disposer d'une installation de stockage momentané de ces produits étant donné que la production est effectuée en continu alors que le conditionnement se fait en discontinu et que les unités de conditionnement d'une même ligne sont soumises périodiquement à des temps d'arrêt requis pour l'entretien, la réparation ou la mise en place du matériau d'emballage.

Par ailleurs, le brevet EP-A-0 569 788 décrit un dispositif récepteur de produits à la sortie d'un ruban transporteur, comportant un poussoir à déplacement horizontal qui coopère avec un ruban dont une extrémité peut être déplacée entre différents niveaux pour évacuer les produits à différents hauteurs. Dans le cas du dispositif décrit dans la publication EP-A-0 569 788, l'interposition d'un ruban transporteur entre le poussoir et une station réceptrice a pour conséquence d'allonger l'unité de stockage et de réduire sa vitesse de fonctionnement.

Ces installations de stockage doivent répondre à un cahier des charges relativement lourd. Elles doivent permettre un stockage de grande capacité et assurer un transport efficace et soigné des produits d'une station de dépôt vers une station réceptrice, en offrant un maximum de sécurité aux produits véhiculés, une grande souplesse d'utilisation et un potentiel de stockage variable en fonction de la demande instantanée.

Parmi les problèmes que l'on rencontre sur ces installations, figure celui de la mise en place et de la reprise des produits sur les tablettes portées par les gondoles. Ces opérations doivent être rapides et précises et les équipements doivent être adaptés aux produits à transférer. En outre les opérations de mise en place et de reprise doivent pouvoir être faites en continu ou de manière discontinue. Dans le premier cas, les chaînes qui véhiculent les gondoles tournent en continu et les équipements de la station de dépôt et de la station réceptrice doivent être agencés pour suivre leur mouvement. Dans le second cas, ces équipements sont stationnaires.

La présente invention se propose de répondre à l'ensemble de ces exigences en offrant une installation de stockage pendulaire qui est souple à l'utilisation et qui présente une grande faculté d'adaptation en fonction des diverses applications auxquelles eue est destinée.

Ce but est atteint par l'installation selon l'invention, qui est caractérisée par les caractéristiques indiquées dans la revendication 1.

De façon avantageuse, l'installation comporte au moins deux poussoirs et deux clavettes d'accouplement autonomes agencées pour accoupler séparément ou simultanément un actionneur central avec l'un ou l'autre de deux actionneurs latéraux portant respectivement lesdits poussoirs.

Dans toutes les formes de réalisation de l'équipement, les poussoirs sont agencés pour évacuer des produits disposés sur des tablettes séparées portées par les gondoles.

Dans la forme de réalisation préférée de l'installation selon l'invention, un ruban transporteur de ladite station réceptrice, agencé pour évacuer les produits, est associé à un mécanisme de déplacement vertical.

Dans une variante de réalisation, la station réceptrice comporte au moins deux rubans transporteurs transversaux agencés pour évacuer simultanément deux produits portés par une gondole.

La présente invention sera mieux comprise en référence à la description d'exemples de réalisation préférés et aux dessins annexés dans lesquels :
la figure 1 est une vue schématique en perspective d'une installation selon l'invention,
la figure 2 est une vue schématique illustrant l'équipement de la station réceptrice des produits pour une installation à cheminement discontinu,
la figure 3 représente l' équipement de la station réceptrice pour une installation à cheminement continu, et
la figure 4 représente une variante de réalisation de l'équipement de la station réceptrice.

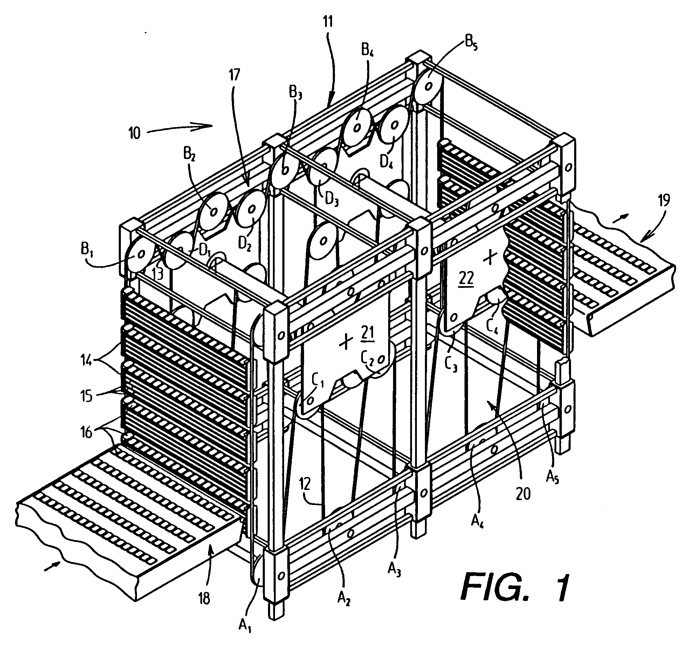

En référence à la figure 1, l'installation de stockage pendulaire 10, représentée en perspective, se compose principalement d'un bâti 11 qui, dans ce cas a la forme d'un parallélépipède rectangle qui définit un espace de stockage à l'intérieur duquel sont montées deux chaînes de transport sans fin 12 et 13 entre lesquelles sont suspendues des gondoles 14 portant des tablettes 15 sur lesquels sont déposés les produits 16. Les gondoles 14 sont suspendues horizontalement par deux pivots latéraux aux chaînes 12 et 13 qui se déplacent parallèlement entre elles selon un trajet à boucles multiples comportant une première section dite section d'alimentation 17 allant d'une station de dépôt 18 des produits sur les tablettes à une station réceptrice 19, agencée pour décharger lesdits tablettes, et une seconde section 20 dite section de retour dans laquelle les tablettes préalablement déchargés retournent de la station réceptrice à la station de dépôt. Dans l'exemple représenté l'installation comporte cinq paires de roues dentées inférieures respectivement A1, A2, A3, A4, A5 et cinq paires de roues dentées supérieures respectivement B1, B2, B3, B4, B5 qui sont montées sur des axes fixes portés par le bâti. Par ailleurs l'installation comporte, dans l'exemple représenté deux chariots mobiles en hauteur respectivement 21 et 22 qui portent chacun deux roues dentées inférieures C1, C2 (pour le chariot 21) et C3, C4 (pour le chariot 22) et deux roues supérieures D1, D2 (pour le chariot 21) et D3, D4 (pour le chariot 22). La section d'alimentation du circuit fermé défini par les deux chaînes 12 et 13 se compose des segments de chaîne passant de la station de dépôt à la verticale de la roue B1, puis par-dessus cette roue, en dessous de la roue supérieure D1 du chariot 21, au-dessus de la roue B2, en dessous de la roue supérieure D2 du chariot 21, puis au-dessus de la roue B3, en dessous de la roue supérieure D3 du chariot 22, au-dessus de la roue B4, en dessous de la roue supérieure D4 du chariot 22, et au-dessus de la roue B5 pour redescendre à la verticale jusqu'à la station réceptrice. La section de retour est définie par les tronçons de chaînes allant de la station de retour en dessous de la roue A5 puis au-dessus de la roue inférieure C4 du chariot 22, en dessous de la roue A4, au-dessus de la roue inférieure C3 du chariot 22, en dessous de la roue A3 au-dessus de la roue inférieure C2 du chariot 21, en dessous de la roue A2, au-dessus de la roue inférieure C1 du chariot 21, et enfin en dessous de la roue A1 pour revenir à la verticale de la station de dépôt. Grâce aux chariots mobiles, l'installation de stockage a une capacité d'accumulation ou de stockage variable. Lorsque les chariots sont en position haute, la section d'alimentation est minimale c'est-à-dire que les produits sont acheminés le plus rapidement possible de la station de dépôt à la station réceptrice. En revanche, lorsque les chariots descendent vers une position basse, la longueur de la section d'alimentation augmente de même que la capacité de stockage de l'installation.

Dans la réalisation selon l'invention, le bâti 11 est conçu selon un principe modulaire, c'est-à-dire qu'il est constitué d'un ou de plusieurs modules rendus solidaires les uns des autres dans le but de permettre une géométrie qui est parfaitement adaptée aux besoins de l' utilisateur et qui satisfait aux exigences imposées par le cahier des charges de l'application visée.

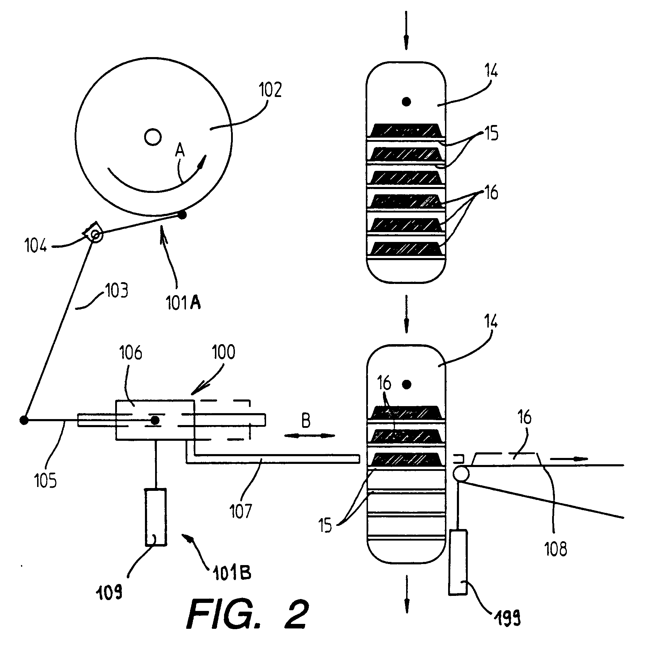

Une première forme de réalisation de l' équipement de la station réceptrice est représentée par la figure 2. Cet équipement se compose d'un dispositif à poussoir 100, d'un premier mécanisme d' entraînement 101A et le cas échéant, d'un second mécanisme d' entraînement 101B. Ce premier mécanisme d' entraînement comprend une came 102 entraînée dans le sens de la flèche A par un moteur électrique (non représenté) qui commande une biellette 103 coudée, articulée sur un pivot fixe 104. L'extrémité libre de la biellette 103 est liée à une tige 105 solidaire d'un coulisseau 106 qui porte un poussoir 107 agencé pour effectuer un déplacement sensiblement horizontal. Un ruban transporteur 108 est prévu pour évacuer les produits 16 disposés sur les tablettes 15 des gondoles 14. A chaque cycle qui correspond à un tour de la came 102, la biellette pivote sur le pivot 104 et déplace le poussoir 107, par l'intermédiaire du coulisseau, dans le sens de la double flèche B. Les gondoles sont entraînées de manière à présenter un produit en regard du poussoir 107 à chaque cycle. Le déplacement horizontal de ce poussoir déplace un produit 16 d'une tablette 15 sur le ruban transporteur 108.

Selon une variante également représentée par la figure 2, l'équipement peut comporter un second mécanisme d' entraînement 101B qui a pour fonction d'assurer un déplacement sensiblement vertical (représenté par la double flèche C) du poussoir 107. Ce déplacement vertical permet de suivre le déplacement des gondoles et, éventuellement d'effectuer l' éjection d'un produit 16 pendant une phase de déplacement de la gondole correspondante. Ce mécanisme peut comporter un vérin hydraulique 109 du type à double effet qui assure le positionnement vertical approprié du poussoir 107.

Lorsque ce mécanisme est installé, il est nécessaire de prévoir également le déplacement vertical du ruban transporteur 108 qui reçoit les produits 16 lorsqu'ils sont éjectés des tablettes 15. A cet effet, la tête du ruban transporteur 108 est associée à un vérin hydraulique 199, également du type à double effet qui est commandé en synchronisme avec le vérin 109.

Il est bien entendu que les vérins hydrauliques pourraient également être remplacés par des vis entraînées en rotation par un moteur ou par tout autre moyen connu ayant les mêmes fonctions.

On notera que dans cette réalisation, les gondoles 14 sont à l'arrêt lors de l' évacuation des produits.

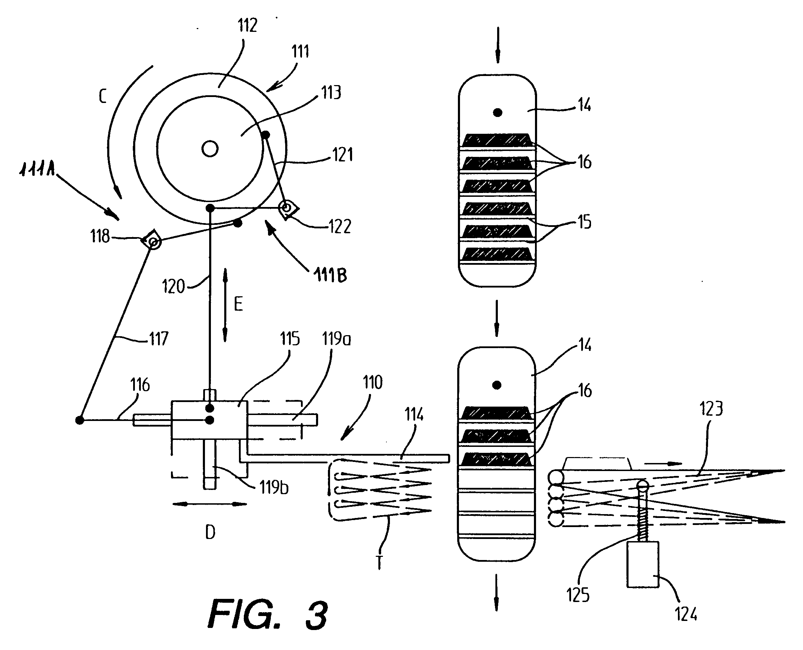

Une deuxième forme de réalisation de l'équipement de la station réceptrice est représentée par la figure 3. Cet équipement se compose d'un dispositif à poussoir 110, d'un premier mécanisme d'entraînement 111A et d'un second mécanisme d'entraînement 111B. Ces mécanismes comprennent respectivement une première came 112 et une deuxième came 113 qui sont entraînées simultanément dans le sens de la flèche C. La première came 112 commande le déplacement horizontal en va-et-vient d'un poussoir 114, dans le sens de la double flèche D. A cet effet ce poussoir est solidaire d'un coulisseau 115 qui est attaché à une tige 116 dont l'extrémité libre est couplée à une extrémité d'une biellette coudée 117, articulée sur un pivot fixe 118, et dont l'autre extrémité est couplée à la came 112. Ce coulisseau est agencé pour se déplacer horizontalement sur un premier organe de guidage 119a. La deuxième came 113 commande le déplacement vertical en va-et-vient du poussoir 114, dans le sens de la double flèche E. A cet effet, le coulisseau 115 portant le poussoir 114 et qui est attaché à une tige 120 dont une extrémité libre est couplée à une extrémité d'une biellette coudée 121, articulée sur un pivot fixe 122, est agencé pour se déplacer verticalement sur un deuxième organe de guidage 119b. Dans cette réalisation le poussoir subit un déplacement combiné selon une direction verticale, qui est commandé par un mécanisme sensiblement similaire à celui qui constitue l'équipement de la station réceptrice décrit en référence à la figure 1, et par un mécanisme complémentaire qui induit le déplacement vertical.

Par ailleurs la réception des produits 16 disposés sur les tablettes 15 des gondoles 14 est assurée par un ruban transporteur 123 dont le support est mobile verticalement. La commande du déplacement vertical de ce support est réalisée, dans ce cas par un moteur électrique 124 qui commande une vis 125 dont une extrémité libre est solidaire de ce support.

L'objet de cette réalisation est de permettre une évacuation des produits en cheminement continu ce qui implique un déplacement vertical du poussoir, pour suivre le déplacement des tablettes, et un déplacement vertical du support du ruban de transport assurant la Il est évident que le mécanisme à vis qui assure le déplacement du ruban transporteur pourrait être remplacé par une came de commande, et que les cames de commande qui assurent les déplacements du poussoir pourraient être remplacées par un mécanisme à vis.

La trajectoire T suivie par le poussoir 114 au cours d'un cycle est représentée partiellement sur la figure et correspond à une boucle fermée. Différentes positions successives du ruban 123 sont également représentées. A chaque passage d'une gondole, le poussoir et le ruban sont ramenés dans leur position initiale. Pendant le déchargement d'une gondole, ils suivent en partie son mouvement de descente pour se positionner en face des produits.

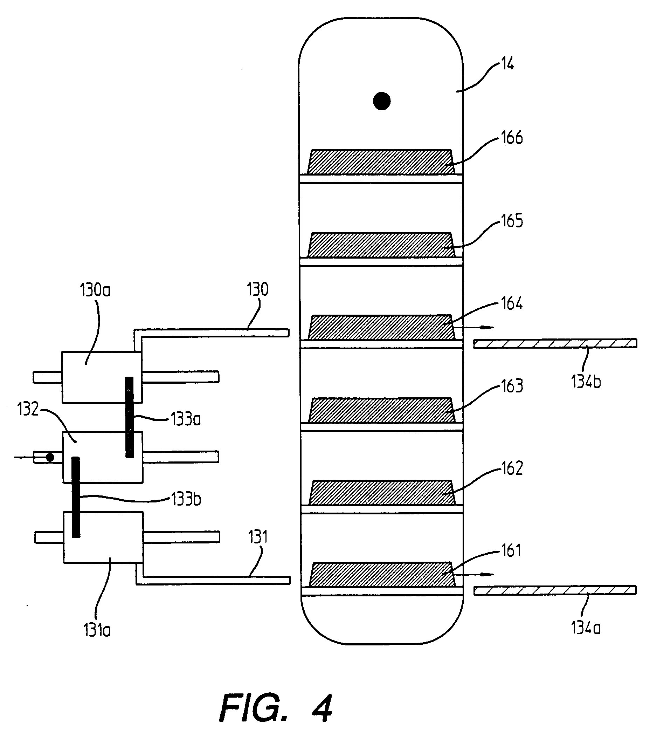

La figure 4 représente une variante de réalisation de l'équipement de la station réceptrice. Dans ce cas l'équipement est un perfectionnement des systèmes représentés par les figures 2 et 3. En effet, le dispositif à poussoir comporte deux poussoirs 130 et 131 couplés chacun à un actionneur latéral 130a et 131a. Les actionneurs latéraux sont entraînés par un actionneur central 132 grâce à deux clavettes d'accouplement autonomes 133a et 133b qui assurent une fonction d' embrayage. Cet équipement comporte par ailleurs deux rubans transporteurs transversaux 134a et 134b qui sont agencés pour évacuer les produits de la gondole 14. Les deux rubans transversaux évacuent les produits vers deux machines d'emballage distinctes (non représentées). En fonctionnement normal les deux poussoirs 130 et 131 opèrent simultanément en repoussant successivement des paires de produits 161, 164, puis 162, 165 et enfin 163, 166. Si pour une raison ou une autre, l'une des machines d' emballage n'est pas opérationnelle momentanément, le poussoir correspondant peut être arrêté par désaccouplement de la clavette correspondante. Tous les produits pourront alors être évacués sur le même ruban.

Ce dispositif à deux poussoirs pouvant être actionnés indépendamment, soit d'une manière combinée, peut être associé à l'un ou l'autre des mécanismes de déplacement vertical décrits ci-dessus. Le nombre de poussoirs n'est d'ailleurs pas limité et il serait possible de coupler six poussoirs à un actionneur unique de manière à éjecter systématiquement et simultanément tous les produits d'une même gondole. Dans ce cas, il convient bien entendu d'assurer l' évacuation des produits par des moyens appropriés, c'est-à-dire soit des rampes qui amènent l'ensemble des produits sur un seul et même ruban, soit des rubans séparés et indépendants.

## Revendications

1. Installation de stockage pendulaire de produits, notamment de produits alimentaires et plus particulièrement de plaques de chocolat ou similaires, ces produits étant déposés sur des tablettes (15) disposées horizontalement sur des gondoles (14) pendues horizontalement à deux chaînes (12, 13) cheminant parallèlement entre elles sur un circuit fermé comprenant une section d'alimentation (17) allant d'une station de dépôt (18) des produits sur les tablettes, à une station réceptrice (19) de ces produits agencée pour décharger les tablettes, et une section de retour (20) dans laquelle les tablettes sont ramenées vides de la station réceptrice à la station de dépôt, dans laquelle la station réceptrice comporte un équipement composé d'un dispositif à poussoir (114) associé à un premier mécanisme d'entraînement (111A), agencé pour imposer audit poussoir un déplacement sensiblement horizontal, et à un second mécanisme d'entraînement (111B) agencé pour imposer audit poussoir un déplacement sensiblement vertical qui se combine audit déplacement sensiblement horizontal, ledit premier mécanisme (111A) comportant une première came de commande (112) liée audit poussoir (114) pour effectuer ledit déplacement sensiblement horizontal, et ledit second mécanisme (111B) comportant une seconde came de commande (113) liée audit poussoir pour effectuer ledit déplacement sensiblement vertical, ledit poussoir (114) étant porté par un coulisseau (115) agencé pour se déplacer horizontalement sur un premier organe de guidage (119a) et pour se déplacer verticalement sur un deuxième organe de guidage (119b).

2. Installation selon la revendication 1, caractérisée en ce qu'elle comporte au moins deux poussoirs (130, 131) et deux clavettes d'accouplement autonomes (133a, 133b) agencées pour accoupler séparément ou simultanément un actionneur central (132) avec l'un ou l'autre de deux actionneurs latéraux (130a, 131a) portant respectivement lesdits poussoirs (130, 131).

3. Installation selon la revendication 2, caractérisée en ce que lesdits poussoirs sont agencés pour évacuer des produits disposés sur des tablettes séparées portées par les gondoles.

4. Installation selon la revendication 1, caractérisée en ce qu'un ruban transporteur (108; 134a, 134b) de ladite station réceptrice, agencé pour évacuer les produits est associé à un mécanisme de déplacement vertical (199).

5. Installation selon la revendication 1, caractérisée en ce que la station réceptrice comporte au moins deux rubans transporteurs transversaux (134a, 134b) agencés pour évacuer simultanément deux produits portés par une gondole (14).

## Claims

1. Pendulant product storage device, in particular for food products and more particularly for bars of chocolate or the like, these products being placed on shelves (15) arranged horizontally on pendulant product carriers (14) horizontally suspended on two chains (12, 13) moving parallel to each other in a closed circuit comprising a feed section (17) going from a station (18) for loading products on the shelves, to a product receiving station (19), arranged for unloading the shelves, and a return section (20) in which the empty shelves are brought back from the receiving station to the loading station, in which the receiving station comprises an equipment consisting of a pusher device (114) associated with a first driving mechanism (111A) arranged for imposing on said pusher a substantially horizontal movement, and to a second driving mechanism (111B) arranged for imposing on said pusher a substantially vertical movement which is combined with said substantially horizontal movement, said first driving mechanism (111A) comprising a first control cam (112) connected to said pusher (114) to perform said substantially horizontal movement, and said second mechanism (111B) comprising a second control cam (113) connected to said pusher to perform said substantially vertical movement, said pusher (114) being carried by a slide (115) arranged for moving horizontally on a first guiding member (119a) and for moving vertically on a second guiding member (119b).

2. Installation according to claim 1, characterised in that it comprises at least two pushers (130, 131) and two autonomous coupling keys (133a, 133b) arranged for coupling a central actuator (132) separately or simultaneously with either one of two lateral actuators (130a, 131a) respectively carrying said pushers (130, 131).

3. Installation according to claim 2, characterised in that said pushers are arranged for clearing products placed on separate shelves carried by the pendulant product carriers.

4. Installation according to claim 1, characterised in that a conveyor belt (108, 104a, 134b) of said receiving station, arranged for clearing the products is associated with a vertical movement mechanism (199).

5. Installation according to claim 1, characterised in that the receiving station comprises at least two transversal conveyor belts (134a, 134b) arranged for simultaneously clearing two products carried by a pendulant product carrier (14).

## Patentansprüche

1. Hängespeicher für Erzeugnisse, insbesondere für Nahrungsmittel und vor allem für Tafeln aus Schokolade oder für ähnliche Erzeugnisse, wobei diese Erzeugnisse auf Platten (15) abgestellt werden, die auf Schaukeln (14) waagrecht angeordnet sind, die an zwei Ketten (12,13) waagrecht angehängt und parallel zueinander auf einem geschlossenen Kreislauf fortbewegt werden, der besteht aus: einer Zufuhrstrecke (17) von einer Station (18) für das Abstellen der Erzeugnisse auf den Platten bis zu einer Station (19) für den Empfang dieser Erzeugnisse, die für das Entladen der Platten eingerichtet ist, und aus einer Strecke für die Rückführung (20), auf der die Platten von der Station für den Empfang auf die Station für das Abstellen leer zurückbefördert werden, wobei die Station für den Empfang eine Vorrichtung mit einer Schubeinrichtung (114) in Verbindung mit einem ersten Antrieb (111A) enthält, der der Schubeinrichtung eine im wesentlichen waagrechte Bewegung aufzwingt, und einen zweiten Antrieb (111B), der der Schubeinrichtung eine im wesentlichen vertikale Bewegung aufzwingt, die mit der im wesentlichen waagrechten Bewegung kombiniert wird, wobei der erste Antrieb (111A) eine erste Steuernocke (112) enthält, die mit der Schubeinrichtung (114) für die Durchführung der im wesentlichen waagrechten Bewegung verbunden ist, und der zweite Antrieb (111B) eine zweite Steuernocke (113) enthält, die mit der Schubeinrichtung für die Durchführung der im wesentlichen vertikalen Bewegung verbunden ist, wobei die Schubeinrichtung (114) von einem Gleitstück (115) getragen wird, das für eine waagrechte Bewegung auf einem ersten Führungsstück (119a) und für eine vertikale Bewegung auf einem zweiten Führungsstück (119b) eingerichtet ist.

2. Hängespeicher nach Anspruch 1,
**dadurch gekennzeichnet,** daß
er mindestens zwei Schubeinrichtungen (130,131) und zwei selbständige Koppelungskeile (133a,133b) enthält, wobei die Koppelungskeile eingerichtet sind, um ein zentrales Betätigungselement (132) mit dem einen oder mit dem anderen seitlichen Betätigungselement (130a,131a), die jeweils die Schubeinrichtungen (130,131) tragen, getrennt oder gleichzeitig zu kuppeln.

3. Hängespeicher nach Anspruch 2,
**dadurch gekennzeichnet,** daß
die Schubeinrichtungen eingerichtet sind, um die Erzeugnisse, die auf den von den Schaukeln getragenen Platten abgestellt wurden, zu räumen.

4. Hängespeicher nach Anspruch 1,
**dadurch gekennzeichnet,** daß
ein Förderband (108,134a,134b) von der Station für den Empfang, das für das Räumen der Erzeugnisse eingerichtet ist, mit einem Antrieb für eine vertikale Bewegung (199) verbunden ist.

5. Hängespeicher nach Anspruch 1,
**dadurch gekennzeichnet,** daß
die Station für den Empfang mindestens zwei Förderbänder in Querrichtung (134a,134b) enthält, die für das gleichzeitige Räumen von zwei von einer Schaukel (14) getragenen Erzeugnissen eingerichtet sind.
